(19) Europäisches Patentamt
European Patent Office
Office européen des brevets

(11) **EP 2 687 003 B1**

(12) **FASCICULE DE BREVET EUROPEEN**

(45) Date de publication et mention
de la délivrance du brevet:
**08.09.2021 Bulletin 2021/36**

(21) Numéro de dépôt: **12714786.6**

(22) Date de dépôt: **15.03.2012**

(51) Int Cl.:
*H04M 1/67* *(2006.01)*    *G06F 3/01* *(2006.01)*

(86) Numéro de dépôt international:
**PCT/FR2012/050543**

(87) Numéro de publication internationale:
**WO 2012/123683 (20.09.2012 Gazette 2012/38)**

(54) **PROCÉDÉ DE SAISIE D'UN CODE À L'AIDE D'UN DISPOSITIF PORTATIF ET DISPOSITIF PORTATIF ASSOCIÉ**

VERFAHREN ZUR EINGABE EINES CODES UNTER VERWENDUNG EINER TRAGBAREN VORRICHTUNG UND ZUGEHÖRIGE TRAGBARE VORRICHTUNG

METHOD FOR ENTERING A CODE USING A PORTABLE DEVICE, AND ASSOCIATED PORTABLE DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.03.2011 FR 1152075**

(43) Date de publication de la demande:
**22.01.2014 Bulletin 2014/04**

(73) Titulaire: **ORANGE**
**92130 Issy-les-Moulineaux (FR)**

(72) Inventeur: **LAROSE, Cyril**
**F-35000 Rennes (FR)**

(56) Documents cités:
**CN-A- 101 951 439    KR-A- 20040 107 055**

• **None**

**Description**

L'invention concerne un procédé de saisie d'un code à l'aide d'un dispositif portatif et un dispositif portatif apte à mettre en œuvre ce procédé.

A titre d'exemples illustratifs, la présente invention s'applique à la saisie d'un code de sécurité pour le déverrouillage d'un dispositif tel qu'un téléphone mobile, à la saisie d'un code de contrôle parental auprès d'un décodeur au moyen d'une télécommande, ou à la saisie de tout autre code susceptible d'être saisi au moyen d'un dispositif portatif.

Il existe de nombreuses méthodes de saisie, à l'aide d'un dispositif portatif, d'un code tel qu'un code de déverrouillage permettant de déverrouiller le dispositif. Par le terme déverrouillage, on entend désigner toute opération permettant de faire passer le dispositif d'un état verrouillé à un état déverrouillé opérationnel, ou bien d'activer une ou plusieurs fonctionnalités du dispositif portatif. Le dispositif portatif peut être un téléphone mobile, une tablette multimédia tactile, une télécommande, par exemple une télécommande de poste de télévision ou une télécommande de décodeur TV, etc.

Une première méthode consiste à saisir un code, ou un mot de passe, à l'aide d'un clavier physique ou bien d'un clavier virtuel s'affichant sur un écran tactile.

Une deuxième méthode consiste à appuyer sur une série prédéfinie de touches de clavier, simultanément ou séquentiellement.

Une troisième méthode consiste à réaliser un geste sur un écran tactile du dispositif à l'aide d'un ou de plusieurs doigts. Ce geste peut être un geste personnel, préconfiguré par l'utilisateur lui-même, ou bien un geste préconfiguré par le fabricant du dispositif. A titre d'exemple illustratif, on peut citer une barre de déverrouillage d'un dispositif à écran tactile tel que décrit dans le document US 7,647,849.

Toutes ces méthodes de déverrouillage peuvent s'avérer inadaptées dans certaines circonstances. Par exemple, en hiver, si l'utilisateur porte des gants, il doit systématiquement les ôter soit pour appuyer sur les touches du clavier physique, ces appuis nécessitant une certaine précision de geste, soit pour toucher l'écran tactile.

Il existe donc un besoin pour une autre méthode de saisie d'un code à l'aide d'un dispositif portatif, adaptée à de telles circonstances.

Le document brevet CN101951439 décrit une mesure d'un angle entre deux vecteurs adjacents pour déverrouiller un dispositif portatif.

A cet effet, l'invention concerne un procédé de saisie d'un code tel que décrit dans la revendication 1.

L'invention permet ainsi de façon simple et ludique de saisir un code, par exemple un code de déverrouillage du dispositif portatif, un code PIN ou un code de contrôle parental, sans besoin d'appuyer sur des touches d'un clavier physique ou de toucher un écran tactile. Un utilisateur peut ainsi saisir le code par simple prise en main et inclinaison du dispositif portatif.

Dans un mode de réalisation particulier, lors de l'étape de détermination du code saisi, dans le cas où il est déterminé que l'angle mesuré est compris à l'intérieur d'une plage angulaire s'étendant entre -PA° et +PA°, PA étant un angle prédéfini, il est déterminé un code en calculant la partie entière du résultat de la somme de l'angle mesuré ($\alpha$; $\beta$) et de l'angle PA, multipliée par une fraction 50/PA. Autrement dit, le code est déterminé en calculant la partie entière

de $\left( (\alpha + PA) * \dfrac{50}{PA} \right),$ où $\alpha$ représente l'angle mesuré.

Le code est de préférence un code à deux chiffres. Si l'on fait varier l'angle mesuré à l'intérieur de la plage angulaire entre -PA° et +PA°, hors bornes, on obtient un code variant entre 00 et 99. Ainsi, on peut obtenir des codes à deux chiffres en faisant varier l'inclinaison du dispositif dans la plage angulaire ]-*PA*°,+*PA*°[.

Avantageusement, dans le cas où il est déterminé que l'angle mesuré est inférieur ou égal à la borne inférieure -PA° de la plage angulaire, il est déterminé que le code est égal à 00.

Avantageusement encore, dans le cas où il est déterminé que l'angle mesuré est supérieur ou égal à la borne supérieure +PA° de la plage angulaire, il est déterminé que le code est égal à 99.

Ainsi, même si l'angle mesuré est hors de la plage angulaire ]-*PA*°;+*PA*°[, on obtient un code correspondant.

Dans un mode de réalisation particulier, le dispositif portatif étant représenté par un plan, l'étape de mesure comprend la mesure d'un premier angle d'inclinaison du dispositif portatif par rapport à un premier axe et la mesure d'un deuxième angle d'inclinaison du dispositif portatif par rapport à un deuxième axe.

Dans ce cas, le procédé permet de déterminer deux codes intermédiaires à partir des deux angles d'inclinaison mesurés. Ces deux codes intermédiaires peuvent être des valeurs numériques à deux chiffres. On peut alors prévoir de former un code final, correspondant au code saisi, par concaténation des deux codes intermédiaires déterminés.

L'invention concerne aussi un procédé de déverrouillage d'un dispositif portatif, dans lequel, un code de déverrouillage étant préconfiguré, il est prévu les étapes suivantes:

**EP 2 687 003 B1**

- saisie d'un code par mise en œuvre du procédé précédemment défini;
- comparaison du code saisi avec le code de déverrouillage préconfiguré;
- déverrouillage du dispositif portatif si la comparaison est positive.

L'invention concerne encore un dispositif portatif tel que décrit dans la revendication 7.

L'invention sera mieux comprise à l'aide de la description suivante d'un mode de réalisation particulier du procédé de saisie d'un code à l'aide d'un dispositif portatif selon l'invention et d'un exemple particulier de réalisation d'un dispositif portatif apte à mettre en œuvre ce procédé, en référence aux dessins annexés sur lesquels :

- la figure 1 représente un organigramme des étapes du procédé de saisie d'un code, selon le mode de réalisation particulier décrit,
- la figure 2 représente un algorithme de calcul mis en œuvre dans le procédé de la figure 1;
- la figure 3 représente un schéma bloc fonctionnel d'un dispositif portatif apte à mettre en œuvre le procédé de la figure 1, selon l'exemple particulier de réalisation, et
- les figures 4A et 4B représentent des vues schématiques en position inclinée du dispositif portatif de la figure 2.

Le procédé de saisie d'un code selon l'invention permet de saisir un code à l'aide un dispositif portatif 1. Dans l'exemple particulier décrit ici, il s'agit d'un code de déverrouillage du dispositif portatif. Par déverrouillage, on entend désigner une opération visant soit à faire passer le dispositif 1 d'un état verrouillé, dans lequel l'utilisation du dispositif 1 n'est pas possible, à un état déverrouillé, dans lequel le dispositif 1 peut être utilisé, soit à activer une ou plusieurs fonctionnalité(s) du dispositif 1.

En variante, le procédé selon l'invention pourrait être utilisé pour saisir un code de contrôle parental à l'aide d'une télécommande, ou un code de déverrouillage d'un équipement (décodeur TV, poste TV, ou autre) à l'aide d'une télécommande ou bien tout autre type de code.

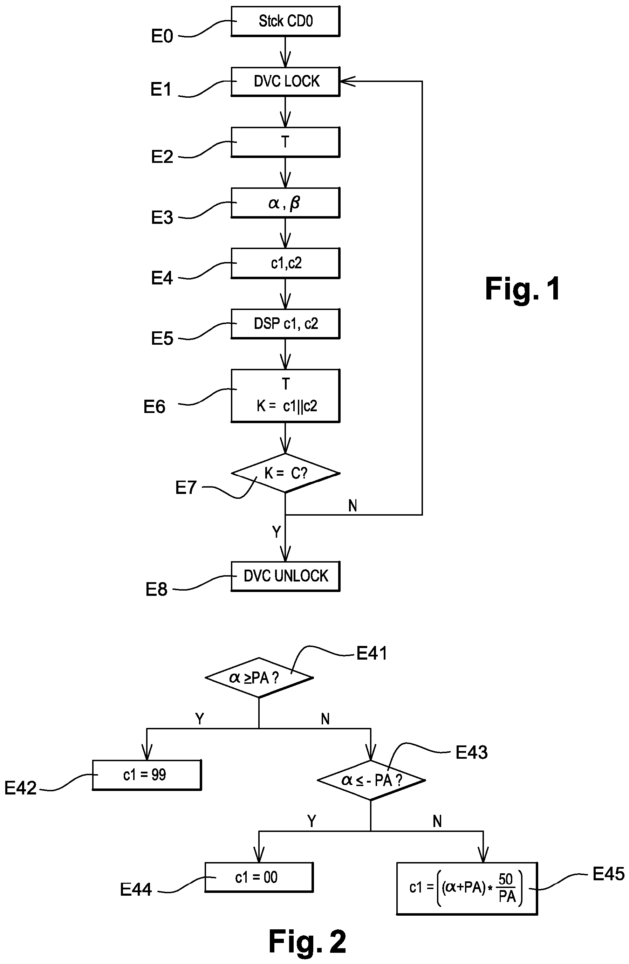

On va maintenant décrire un mode de réalisation particulier du procédé de saisie d'un code en référence à la figure 1. Dans l'exemple particulier décrit ici, le dispositif portatif 1 est un téléphone mobile doté d'un écran d'affichage tactile 10.

Lors d'une étape préalable de configuration E0, un utilisateur enregistre un code de déverrouillage ici à quatre chiffres, noté C, en le saisissant à l'aide d'un clavier virtuel s'affichant sur l'écran tactile 10. Le code de déverrouillage C est ici enregistré dans une mémoire interne 11 du dispositif portatif. En variante, le code de déverrouillage pourrait être un code de déverrouillage du type code PIN d'une carte de sécurité, en l'espèce une carte SIM 3, connectée au dispositif portatif 1 et logée dans celui-ci. Dans ce cas, le code PIN de déverrouillage de la carte SIM serait enregistré dans une mémoire 30 de la carte de sécurité SIM 3.

A titre d'exemple illustratif, le code de déverrouillage C enregistré dans la mémoire 11 du dispositif 1 est "0831".

Lors d'une étape E1, le dispositif portatif 1 est dans un état verrouillé. Dans cet état, l'utilisation du dispositif portatif 1 n'est pas possible.

Lorsqu'un utilisateur souhaite déverrouiller le dispositif portatif 1, il effectue au préalable une action particulière pour le signaler au dispositif 1, lors d'une étape E2. Dans l'exemple particulier décrit ici, cette action particulière est un appui de l'utilisateur sur une touche d'actionnement T spécifique du dispositif portatif 1. En variante, on pourrait envisager un appui sur une touche de clavier quelconque, dans le cas d'un dispositif doté d'un clavier physique, sur une touche de volume, ou encore un appui sur l'écran tactile, dans le cas où le dispositif est doté d'un écran tactile. Une fois l'action particulière réalisée, le dispositif 1 passe dans un état d'attente de la saisie d'un code K par l'utilisateur.

Pour saisir le code K, l'utilisateur prend le dispositif portatif 1 à l'aide d'une main et l'incline d'un premier angle par rapport à un premier axe de référence x, et d'un deuxième angle par rapport à un deuxième axe de référence y, lors d'une étape E3, jusqu'à atteindre un premier et un deuxième angle cible correspondant à une position d'inclinaison cible. Pour la mesure des angles d'inclinaison, le dispositif 1 est représenté par un plan P. Ce plan P est par exemple le plan à travers lequel s'étend l'écran du dispositif 1.

On note $\alpha$ le résultat d'une mesure d'angle entre le plan P et l'axe x et $\beta$ le résultat d'une mesure d'angle entre le plan P et l'axe y. Dans l'exemple particulier décrit ici, les axes x et y sont respectivement deux axes orthogonaux définissant un plan horizontal.

A chaque angle mesuré $\alpha$, $\beta$ correspond un code intermédiaire $c_1$, $c_2$, respectivement. Pour faire varier chaque code intermédiaire $c_1$, $c_2$ dans une plage numérique de valeurs à deux chiffres, allant de 00 à 99, la mesure de chaque angle $\alpha$ et $\beta$ doit être effectuée dans une plage angulaire prédéfinie variant entre -PA° et +PA°, PA étant une valeur d'angle. Dans l'exemple particulier décrit ici, l'angle PA vaut 45°. Cet angle PA peut être configuré par un utilisateur ou préconfiguré par le fabricant du dispositif 1.

Durant l'étape d'inclinaison E3, une correspondance entre les deux angles mesurés $\alpha$ et $\beta$ et les deux codes intermédiaires $c_1$ et $c_2$ respectifs est déterminée, lors d'une étape E4, à l'aide d'un algorithme de calcul.

En référence à la figure 2, un mode particulier de réalisation de cet algorithme de calcul est le suivant :

- pour chaque angle mesuré α (β), il est déterminé si l'angle mesuré α (β) est supérieur ou égal à l'angle +PA°, soit ici 45°, lors d'une étape de test E41;
- si le test E41 est positif (branche Y sur la figure 2), autrement dit si l'angle mesuré est supérieur à 45°, alors le code c1 (c2) est déterminé égal à 99, lors d'une étape E42;
- si le test E41 est négatif (branche N sur la figure 2), autrement dit si l'angle mesuré est inférieur à 45°, alors il est déterminé si l'angle mesuré α (β) est inférieur ou égal à -PA°, soit ici -45°, lors d'une étape de test E43;
- si le test E43 est positif (branche Y sur la figure 2), autrement dit si l'angle mesuré α (β) est inférieur ou égal à -PA°, soit ici -45°, alors le code c1 (c2) est déterminé égal à 00, lors d'une étape E44;
- si le test E43 est négatif (branche N sur la figure 2), autrement dit si l'angle mesuré α (β) est strictement supérieur à -PA° (ici -45°) et strictement inférieur à +PA° (ici +45°), alors le code c1 (c2) est déterminé égal à la partie entière du résultat de la somme de l'angle mesuré α (β) et de l'angle PA, multipliée par la fraction 50/PA. (avec PA valant 45 ici), lors d'une étape E45. Autrement dit :

  ▪

$$c1 = \text{partie entière} \left( (\alpha + PA) * \frac{50}{PA} \right) = \left\lfloor (\alpha + PA) * \frac{50}{PA} \right\rfloor$$

  ▪

$$c2 = \text{partie entière} \left( (\beta + PA) * \frac{50}{PA} \right) = \left\lfloor (\beta + PA) * \frac{50}{PA} \right\rfloor$$

  ▪ avec PA = 45.

On notera que la figure 2 représente l'algorithme de calcul mis en œuvre pour déterminer un code c1 à partir d'un angle α mesuré. Un algorithme de calcul similaire est mis en œuvre pour déterminer un code c2 à partir d'un angle β mesuré.

Ainsi, en faisant varier les angles mesurés α et β, de préférence entre -45° et +45°, les codes intermédiaires c1 et c2 respectivement obtenus varient entre 00 et 99, chaque code intermédiaire c1, c2 étant défini sur deux chiffres.

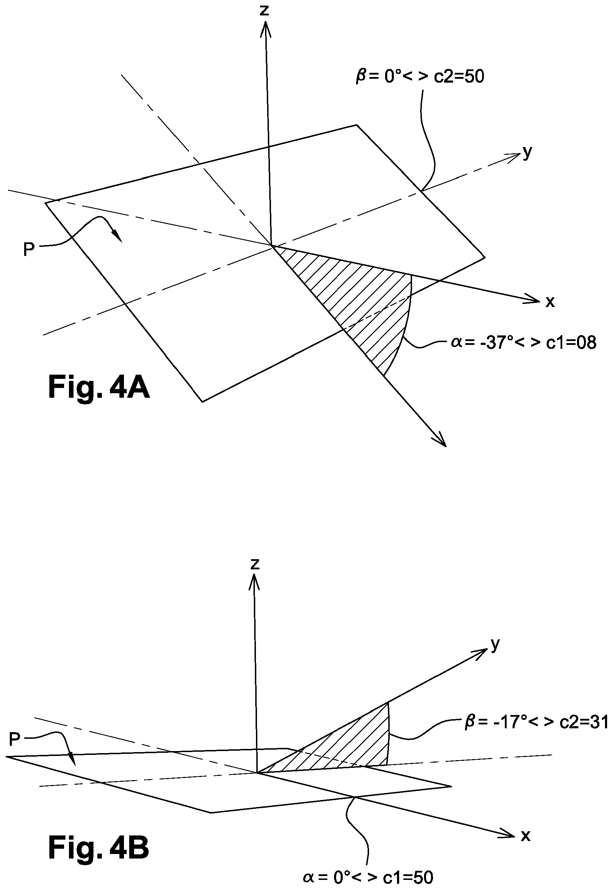

Pendant que l'utilisateur incline le dispositif 1, l'écran d'affichage 10 du dispositif 1 affiche les valeurs des paires successives de codes intermédiaires (c1, c2) obtenues à partir des paires successives d'angles d'inclinaison mesurés α et β, lors d'une étape E5 concomitante à l'étape E3. Lorsque la position d'inclinaison cible, pour laquelle l'écran 10 affiche les codes intermédiaires c1 et c2 qui, concaténés l'un à l'autre c1∥c2 forment un code final de déverrouillage K à saisir, est atteinte, l'utilisateur appuie de nouveau sur la touche d'actionnement T afin de valider la saisie du code de déverrouillage K, lors d'une étape E6. En l'espèce, les angles α et β mesurés valent -37° et -17° respectivement. Les codes intermédiaires c1 et c2 déterminés à partir de ces angles α = -37° et β = -17° valent respectivement "08" et "31". Le code final K saisi vaut donc "0831". La figure 4A montre le dispositif 1, représenté par le plan P, incliné d'un angle α de -37° par rapport à l'axe x, l'angle β entre le plan P et l'axe y valant 0°. La figure 4B montre le dispositif 1, représenté par le plan P, incliné d'un angle β de -17° par rapport à l'axe y, l'angle α entre le plan P e l'axe x valant 0°. Par souci de clarté, chacune des deux figures 4A et 4B représente l'inclinaison du dispositif 1 par rapport à un seul axe x ou y. Pour la saisie du code K, le dispositif 1 doit être incliné à la fois d'un angle α de -37° par rapport à l'axe x et d'un angle β de -17° par rapport à l'axe y. En variante, on pourrait envisager que la saisie d'un code K s'effectue en deux étapes :

- une première étape de saisie du code c1, par inclinaison du dispositif d'un angle α de -37° par rapport à l'axe x, l'angle β entre le plan P et l'axe y étant quelconque, et validation par appui sur la touche T;
- une deuxième étape de saisie du code c2, par inclinaison du dispositif d'un angle β de -17° par rapport à l'axe y, l'angle α entre le plan P et l'axe x étant quelconque, et validation par appui sur la touche T.

Dans une variante de réalisation, une fois la position inclinée cible atteinte, l'utilisateur maintient le dispositif portatif 1 dans cette position inclinée pendant une durée de pause, supérieure ou égale à un seuil τ. Par exemple, ce seuil τ vaut 3 secondes. Il est prévu une étape de test durant laquelle le dispositif 1 détecte si une position inclinée est maintenue pendant une durée T supérieure ou égale au seuil τ. Si le test est positif, autrement dit en cas de détection d'un maintien de la position inclinée cible pendant une durée supérieure ou égale au seuil τ, le dispositif 1 valide la saisie du code K obtenu par concaténation des codes intermédiaires c1 et c2.

Puis le dispositif 1 compare le code saisi K "0831", avec le code de déverrouillage C préconfiguré et enregistré dans la mémoire 11 du dispositif 1, lors d'une étape de test E7.

Si la comparaison est positive (branche Y sur la figure 1), autrement dit si le code saisi K est égal au code de déverrouillage préenregistré C, alors le dispositif 1 est déverrouillé, lors d'une étape E8, et son utilisation devient possible.

Si la comparaison est négative (branche N sur la figure 1), autrement dit si le code saisi K n'est pas égal au code de déverrouillage configuré C, le dispositif reste à l'état verrouillé, la saisie du code étant un échec. Le procédé revient alors à l'étape E1.

On pourrait prévoir un nombre limité d'échecs possibles, au-delà duquel le dispositif passerait dans un état bloqué, le déblocage nécessitant par exemple la saisie d'un code supplémentaire de déblocage.

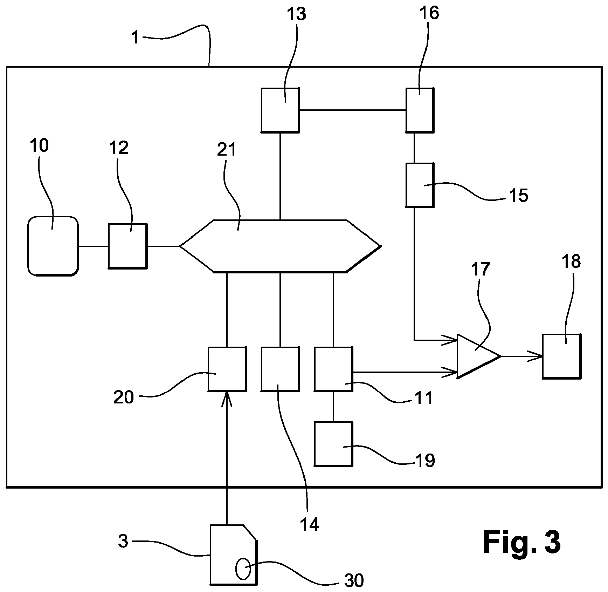

On va maintenant décrire le dispositif 1, en référence à la figure 3. Par souci de clarté, seuls les éléments du dispositif 1 relatifs à l'invention seront décrits ici.

Le dispositif 1 comprend :

- un écran d'affichage tactile 10;
- un module 12 de gestion de l'écran 10;
- une mémoire interne 11;
- un capteur d'inclinaison 13, en l'espèce un accéléromètre;
- une touche d'actionnement T 14;
- deux mémoires de stockage 11 et 15;
- un module 16 de détermination de codes c1 et c2 intermédiaires et d'un code final saisi ;
- un comparateur 17;
- un module de verrouillage/déverrouillage 18;
- un module de paramétrage 19 et
- un lecteur de carte de sécurité 20.

Le module de gestion 12 comprend un gestionnaire d'écran agencé pour gérer l'affichage à l'écran 10 et la saisie d'informations sur l'écran tactile 10. Le module de gestion 12 est notamment agencé pour gérer et commander l'affichage des codes intermédiaires c1 et c2 lors de l'étape E5 du procédé précédemment décrit.

Le module de paramétrage 19 est agencé pour paramétrer le dispositif 1. Il permet notamment la configuration par un utilisateur et l'enregistrement dans la mémoire 11 d'un code C de déverrouillage du dispositif 1, configuré ici par un utilisateur.

La mémoire interne 11 est destinée à stocker des paramètres de configuration du dispositif 1. En particulier, elle est agencée pour enregistrer le code de déverrouillage C configuré par un utilisateur.

L'accéléromètre 13 est agencé pour mesurer les angles d'inclinaison entre un plan P à travers lequel s'étend l'écran d'affichage 10 et, d'une part, un axe de référence x et, d'autre part, un axe de référence y. Les axes x et y sont, dans l'exemple particulier décrit ici, deux axes orthogonaux formant un plan horizontal. L'angle mesuré $\alpha$ est l'angle entre le plan P et l'axe x. L'angle mesuré $\beta$ est l'angle entre le plan P et l'axe y.

La touche d'actionnement T est adaptée pour la mise en œuvre des étapes E2 et E6 précédemment décrites.

Le module 16 est agencé pour déterminer des codes intermédiaires c1 et c2 à partir d'angles $\alpha$ et $\beta$ mesurés, en mettant en œuvre l'algorithme de calcul E4 précédemment décrit en relation avec la figure 2. Le module 16 est ainsi agencé pour mettre en œuvre l'étape E4 du procédé précédemment décrit.

La mémoire de stockage 15, reliée au module 16 de détermination de codes c1 et c2, est destinée à stocker le code K final saisi, obtenu par concaténation des codes intermédiaires c1 et c2 correspondant à la position d'inclinaison cible validée par appui sur la touche d'actionnement T par l'utilisateur. Sur validation de la position d'inclinaison cible par appui sur la touche T, le module 16 est agencé pour mémoriser un code K saisi dans la mémoire 15.

Le comparateur 17, relié en entrée à la mémoire 11 et à la mémoire 15, est agencé pour comparer le code C pré-configuré par un utilisateur et stocké dans la mémoire 11 et le code K saisi et stocké par la mémoire 15. Le comparateur 17 est relié en sortie au module 18 de déverrouillage et de verrouillage du dispositif 1. Il est agencé, en cas de comparaison positive, pour transmettre une commande de déverrouillage au module 18. Le comparateur 17 est agencé pour mettre en œuvre l'étape E7 du procédé précédemment décrit.

Le module 18 de verrouillage/déverrouillage du dispositif 1 est agencé pour faire passer le dispositif d'un état verrouillé à un état déverrouillé et, à l'inverse, d'un état déverrouillé à un état verrouillé, sur réception de commandes correspondantes. Le module 18 est agencé pour mettre en œuvre l'étape E8 du procédé précédemment décrit.

Le dispositif 1 comprend également un module de commande 21, en l'espèce un microprocesseur, auquel tous les éléments du dispositif 1 sont connectés et destiné à contrôler le fonctionnement de ces éléments.

Le module 12 de gestion d'écran, le module 16 de détermination de codes, le comparateur 17 et le module 18 de verrouillage et de déverrouillage sont des modules logiciels comprenant des instructions de code pour mettre en œuvre les étapes correspondantes du procédé précédemment décrites, lorsque ces modules logiciels sont exécutés par le microprocesseur 21. L'invention concerne donc aussi un programme d'ordinateur comprenant des instructions de code pour mettre en œuvre les étapes du procédé de saisie d'un code précédemment décrit, lorsque ledit programme est exécuté par un processeur.

Le dispositif portatif qui vient d'être décrit intègre un écran d'affichage. En variante, le dispositif portatif selon l'invention pourrait être sans écran. Dans ce cas, l'affichage du ou des code(s) saisi(s) pourrait se faire sur un écran déporté d'un autre équipement. Par exemple, dans le cas où le dispositif portatif est une télécommande d'écran de télévision, sans écran, l'affichage des codes pourrait se faire sur l'écran de télévision.

On pourrait envisager de mettre en œuvre un procédé analogue pour verrouiller le dispositif 1 ou tout au moins désactiver une ou plusieurs fonctions du dispositif 1.

Dans l'exemple qui vient d'être décrit, le code C préconfiguré est enregistré dans une mémoire du dispositif portatif 1. En variante, le code C pourrait être enregistré dans une mémoire externe, par exemple dans une mémoire 30 d'une carte de sécurité 3, telle qu'une carte SIM, connectée au dispositif 1.

**Revendications**

1. Procédé de saisie d'un code numérique à l'aide d'un dispositif portatif, le dispositif portatif étant représenté par un plan (P), dans lequel les étapes suivantes sont exécutées par le dispositif :

   - mesure d'un premier angle d'inclinaison ($\alpha$) du dispositif portatif par rapport à un premier axe (x);
   - mesure d'un deuxième angle d'inclinaison ($\beta$) du dispositif portatif par rapport à un deuxième axe (y) ;
   - détermination d'un code numérique saisi à partir d'un premier (c1) et d'un deuxième (c2) codes intermédiaires, le premier code intermédiaire, respectivement le deuxième code intermédiaire, correspondant au premier angle d'inclinaison mesuré, respectivement au deuxième angle d'inclinaison mesuré, et variant dans une plage numérique de valeurs à deux chiffres, le code numérique saisi étant déterminé par concaténation du premier et du deuxième codes intermédiaires ;
   dans lequel, dans le cas où il est déterminé que le premier angle mesuré, respectivement le deuxième angle mesuré, est compris à l'intérieur d'une plage angulaire s'étendant entre -PA° et +PA°, PA étant un angle prédéfini, le premier code intermédiaire, respectivement le deuxième code intermédiaire, est déterminé en calculant la partie entière de la somme du premier angle mesuré, respectivement du deuxième angle mesuré, et de l'angle PA, multipliée par une fraction 50/PA.

2. Procédé selon la revendication 1, dans lequel, dans le cas où il est déterminé que le premier angle mesuré, respectivement le deuxième angle mesuré, est supérieur ou égal à la borne supérieure +PA° de la plage angulaire, il est déterminé que le premier code intermédiaire, respectivement le deuxième code intermédiaire, est égal à 99.

3. Procédé selon la revendication 1 ou 2, dans lequel, dans le cas où il est déterminé que le premier angle mesuré, respectivement le deuxième angle mesuré, est inférieur ou égal à la borne inférieure -PA° de la plage angulaire, il est déterminé que le premier code intermédiaire, respectivement le deuxième code intermédiaire, est égal à 00.

4. Procédé selon la revendication 1, dans lequel le premier et le deuxième axe sont orthogonaux et définissent un plan horizontal.

5. Procédé selon la revendication 1, dans lequel, le dispositif portatif comprenant un écran d'affichage s'étendant à travers un plan, le premier angle mesuré, respectivement le deuxième angle mesuré, correspond à un angle entre le plan à travers lequel s'étend l'écran et un axe de référence.

6. Procédé de déverrouillage d'un dispositif portatif, dans lequel, un code numérique de déverrouillage étant préconfiguré, il est prévu les étapes suivantes:

   - saisie d'un code numérique par mise en œuvre du procédé selon la revendication 1;
   - comparaison du code saisi avec le code de déverrouillage préconfiguré;
   - déverrouillage du dispositif portatif si la comparaison est positive.

7. Dispositif portatif comprenant

   - des moyens de mesure d'un premier angle d'inclinaison ($\alpha$) du dispositif portatif par rapport à un premier axe (x) et d'un deuxième angle d'inclinaison ($\beta$) du dispositif portatif par rapport à un deuxième axe (y), le dispositif portatif étant représenté par un plan (P);

- des moyens de détermination d'un code numérique saisi à partir d'un premier (c1) et d'un deuxième (c2) codes intermédiaires, le premier code intermédiaire, respectivement le deuxième code intermédiaire correspondant au premier angle d'inclinaison mesuré, respectivement au deuxième angle d'inclinaison mesuré, et variant dans une plage numérique de valeurs à deux chiffres, le code numérique étant déterminé par concaténation du premier et du deuxième codes intermédiaires, les moyens de détermination du code saisi étant en outre agencés pour, dans le cas où il est déterminé que le premier angle mesuré, respectivement le deuxième angle mesuré, est compris à l'intérieur d'une plage angulaire s'étendant entre -PA° et +PA°, PA étant un angle prédéfini, déterminer le premier code intermédiaire, respectivement le deuxième code intermédiaire, en calculant la partie entière de la somme du premier angle mesuré, respectivement du deuxième angle mesuré, et de l'angle PA, multipliée par une fraction 50/PA..

8. Dispositif selon la revendication 7, dans lequel sont prévus des moyens de comparaison du code saisi et d'un code de déverrouillage mémorisé, et des moyens de déverrouillage du dispositif portatif si la comparaison est positive.

9. Programme d'ordinateur comprenant des instructions de code pour mettre en œuvre les étapes du procédé de saisie selon la revendication 1, lorsque ledit programme est exécuté par un processeur.


**Patentansprüche**

1. Verfahren zur Erfassung eines Zahlencodes mithilfe einer tragbaren Vorrichtung, wobei die tragbare Vorrichtung durch eine Ebene (P) darstellt wird, wobei die folgenden Schritte von der Vorrichtung ausgeführt werden:

   - Messen eines ersten Neigungswinkels ($\alpha$) der tragbaren Vorrichtung zu einer ersten Achse (x);
   - Messen eines zweiten Neigungswinkels ($\beta$) der tragbaren Vorrichtung zu einer zweiten Achse (y);
   - Bestimmen eines erfassten Zahlencodes anhand eines ersten (c1) und eines zweiten (c2) Zwischencodes, wobei der erste Zwischencode beziehungsweise der zweite Zwischencode dem gemessenen ersten Neigungswinkel beziehungsweise dem gemessenen zweiten Neigungswinkel entsprechen und in einem Zahlenbereich zweistelliger Werte variieren, wobei der erfasste Zahlencode durch Verkettung des ersten und zweiten Zwischencodes bestimmt wird;
   wobei in dem Fall, dass bestimmt wird, dass der gemessene erste Winkel beziehungsweise der gemessene zweite Winkel innerhalb eines Winkelbereichs liegt, der sich zwischen -PA° und +PA° erstreckt, wobei PA ein vorgegebener Winkel ist, der erste Zwischencode beziehungsweise der zweite Zwischencode durch Berechnen des ganzzahligen Anteils der Summe des gemessenen ersten Winkels beziehungsweise des gemessenen zweiten Winkels und des Winkels PA, multipliziert mit einem Bruch 50/PA, bestimmt wird.

2. Verfahren nach Anspruch 1, wobei in dem Fall, dass bestimmt wird, dass der gemessene erste Winkel beziehungsweise der gemessene zweite Winkel größer als oder gleich der Obergrenze +PA° des Winkelbereichs ist, bestimmt wird, dass der erste Zwischencode beziehungsweise der zweite Zwischencode gleich 99 ist.

3. Verfahren nach Anspruch 1 oder 2, wobei in dem Fall, dass bestimmt wird, dass der gemessene erste Winkel beziehungsweise der gemessene zweite Winkel kleiner als oder gleich der Untergrenze -PA° des Winkelbereichs ist, bestimmt wird, dass der erste Zwischencode beziehungsweise der zweite Zwischencode gleich 00 ist.

4. Verfahren nach Anspruch 1, wobei die erste und die zweite Achse orthogonal sind und eine horizontale Ebene definieren.

5. Verfahren nach Anspruch 1, wobei, die tragbare Vorrichtung umfassend einen Anzeigebildschirm, der sich durch eine Ebene erstreckt, der gemessene erste Winkel beziehungsweise der gemessene zweite Winkel einem Winkel zwischen der Ebene, durch welche sich der Bildschirm erstreckt, und einer Bezugsachse entspricht.

6. Verfahren zur Entriegelung einer tragbaren Vorrichtung, wobei, wobei ein Entriegelungs-Zahlencode vorkonfiguriert ist, die folgenden Schritte vorgesehen sind:

   - Erfassen eines Zahlencodes durch Umsetzung des Verfahrens nach Anspruch 1;
   - Vergleichen des erfassten Codes mit dem vorkonfigurierten Entriegelungscode;
   - Entriegeln der tragbaren Vorrichtung, wenn der Vergleich positiv ist.

**7.** Tragbare Vorrichtung, umfassend

- Mittel zum Messen eines ersten Neigungswinkels ($\alpha$) der tragbaren Vorrichtung zu einer ersten Achse (x) und eines zweiten Neigungswinkels ($\beta$) der tragbaren Vorrichtung zu einer zweiten Achse (y), wobei die tragbare Vorrichtung durch eine Ebene (P) dargestellt ist;
- Mittel zum Bestimmen eines erfassten Zahlencodes anhand eines ersten (c1) und eines zweiten (c2) Zwischencodes, wobei der erste Zwischencode beziehungsweise der zweite Zwischencode dem gemessenen ersten Neigungswinkel beziehungsweise dem gemessenen zweiten Neigungswinkel entsprechen und in einem Zahlenbereich zweistelliger Werte variieren, wobei der Zahlencode durch Verkettung des ersten und zweiten Zwischencodes bestimmt wird, wobei die Mittel zum Bestimmen des erfassten Codes ferner angeordnet sind, in dem Fall, dass bestimmt wird, dass der gemessene erste Winkel beziehungsweise der gemessene zweite Winkel innerhalb eines Winkelbereichs liegt, der sich zwischen -PA° und +PA° erstreckt, wobei PA ein vorgegebener Winkel ist, den ersten Zwischencode beziehungsweise den zweiten Zwischencode durch Berechnen des ganzzahligen Anteils der Summe des gemessenen ersten Winkels beziehungsweise des gemessenen zweiten Winkels und des Winkels PA, multipliziert mit einem Bruch 50/PA, zu bestimmen.

**8.** Vorrichtung nach Anspruch 7, wobei Mittel zum Vergleichen des erfassten Codes und eines gespeicherten Entriegelungscodes und Mittel zum Entriegeln der tragbaren Vorrichtung, wenn der Vergleich positiv ist, vorgesehen sind.

**9.** Computerprogramm umfassend Code-Anweisungen für die Durchführung der Schritte des Erfassungsverfahrens nach Anspruch 1, wenn das Programm von einem Prozessor ausgeführt wird.

## Claims

**1.** Method for inputting a numerical code by means of a portable device, the portable device being represented by a plane (P), wherein the following steps are executed by the device:

- measuring a first angle of inclination ($\alpha$) of the portable device with respect to a first axis (x);
- measuring a second angle of inclination ($\beta$) of the portable device with respect to a second axis (y);
- determining an input numerical code on the basis of a first (c1) and a second (c2) intermediate code, the first intermediate code and the second intermediate code corresponding to the first measured angle of inclination and the second measured angle of inclination, respectively, and varying within a numerical range of two-digit values, the input numerical code being determined by concatenation of the first and second intermediate codes; wherein, if it is determined that the first measured angle or the second measured angle, respectively, lies within an angular range extending between -PA° and +PA°, PA being a predefined angle, the first intermediate code or the second intermediate code, respectively, is determined by calculating the integer part of the sum of the first measured angle or of the second measured angle, respectively, and of the angle PA, multiplied by a fraction 50/PA.

**2.** Method according to Claim 1, wherein, if it is determined that the first measured angle or the second measured angle, respectively, is greater than or equal to the upper limit +PA° of the angular range, it is determined that the first intermediate code or the second intermediate code, respectively, is equal to 99.

**3.** Method according to Claim 1 or 2, wherein, if it is determined that the first measured angle or the second measured angle, respectively, is less than or equal to the lower limit -PA° of the angular range, it is determined that the first intermediate code or the second intermediate code, respectively, is equal to 00.

**4.** Method according to Claim 1, wherein the first and second axes are orthogonal and define a horizontal plane.

**5.** Method according to Claim 1, wherein, the portable device comprising a display screen extending across a plane, the first measured angle or the second measured angle, respectively, corresponds to an angle between the plane across which the screen extends and a reference axis.

**6.** Method for unlocking a portable device, wherein, a numerical unlocking code being preconfigured, the following steps are provided:

- inputting a numerical code by implementing the method according to Claim 1;

- comparing the input code with the preconfigured unlocking code;
- unlocking the portable device if the comparison is positive.

7. Portable device comprising

- means for measuring a first angle of inclination ($\alpha$) of the portable device with respect to a first axis (x) and a second angle of inclination ($\beta$) of the portable device with respect to a second axis (y), the portable device being represented by a plane (P);
- means for determining an input numerical code on the basis of a first (c1) and a second (c2) intermediate code, the first intermediate code and the second intermediate code corresponding to the first measured angle of inclination and the second measured angle of inclination, respectively, and varying within a numerical range of two-digit values, the numerical code being determined by concatenation of the first and second intermediate codes, the means for determining the input code being further designed, if it is determined that the first measured angle or the second measured angle, respectively, lies within an angular range extending between -PA° and +PA°, PA being a predefined angle, to determine the first intermediate code or the second intermediate code, respectively, by calculating the integer part of the sum of the first measured angle or of the second measured angle, respectively, and of the angle PA, multiplied by a fraction 50/PA.

8. Device according to Claim 7, wherein means for comparing the input code and a stored unlocking code and means for unlocking the portable device if the comparison is positive are provided.

9. Computer program comprising code instructions for implementing the steps of the input method according to Claim 1, when said program is executed by a processor.

Fig. 1

Fig. 2

**Fig. 3**

$\beta = 0° < > c2=50$

$\alpha = -37° < > c1=08$

**Fig. 4A**

$\beta = -17° < > c2=31$

**Fig. 4B**

$\alpha = 0° < > c1=50$

## RÉFÉRENCES CITÉES DANS LA DESCRIPTION

**Documents brevets cités dans la description**

- US 7647849 B

- CN 101951439